# EUROPEAN PATENT APPLICATION

(11) **EP 1 755 314 A2**
(43) Date of publication of application: **21.02.2007**
(21) Application number: 06253944.0
(22) Date of filing: 27.07.2006
(51) Int. Cl.: H04L 29/08

(54) **TCP normalisation engine**

(30) Priority: 28.07.2005 CA 2514039
(71) Applicant: Third Brigade, Inc., Ottawa, Ontario K2K 2M5 (CA)
(72) Inventor: Stefan, Rares, Montreal Quebec H1T 2X7 (CA); Lie, Valeriu, Quebec H9B 3G8 (CA); McGee, William, Otawa Ontario K2A 2J5 (CA)
(74) Representative: Skone James, Robert Edmund

(57) **Abstract**

The present invention relates to network security systems and, more particularly, to a method and apparatus for maintaining a TCP connection when the payload data of a TCP segment transmitted from source to destination is modified. The present invention allows the payload data of a TCP segment to be modified and, specifically, changed in length by an intermediate device during a TCP connection between any two hosts while adhering to the semantics of the TCP protocol so that the TCP connection may be maintained. More specifically, the invention comprises, in a TCP normalization engine communicating with a source and a destination, a method of maintaining a TCP connection between the source and the destination during modification of a payload associated with a TCP segment, the method comprising: receiving the TCP segment from the source at a process incoming module; determining if the TCP segment contains payload data; if the TCP segment contains payload data, invoking a process ack module and a process seq module, wherein the process seq module processes the payload data to determine if a payload correction is required; if a payload correction is required, updating a state table and modifying the payload data to reflect the payload data correction; modifying the TCP segment with at least the modified payload data; and forwarding the modified TCP segment to the destination. Advantageously, this approach allows payload data content to be changed flexibly in order to remove or neutralize protocol violations or attacks.

## Description

### BACKGROUND OF THE INVENTION

### **Copyright Notice**

*A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever*

### Field of Invention

The present invention relates to network security systems and, more particularly, to a method and apparatus for maintaining a TCP connection when the payload data length of a TCP segment transmitted from source to destination is modified

### Description of the Related Prior Art

TCP is a protocol that runs on top of IP. TCP is a reliable, connection oriented service. An overview of TCP/IP is given in Stevens, W. Richard, "TCP/IP Illustrated, Volume 1ISBN 0-201-633469 [1]. A very brief overview of TCP for the purposes of this description is given below.

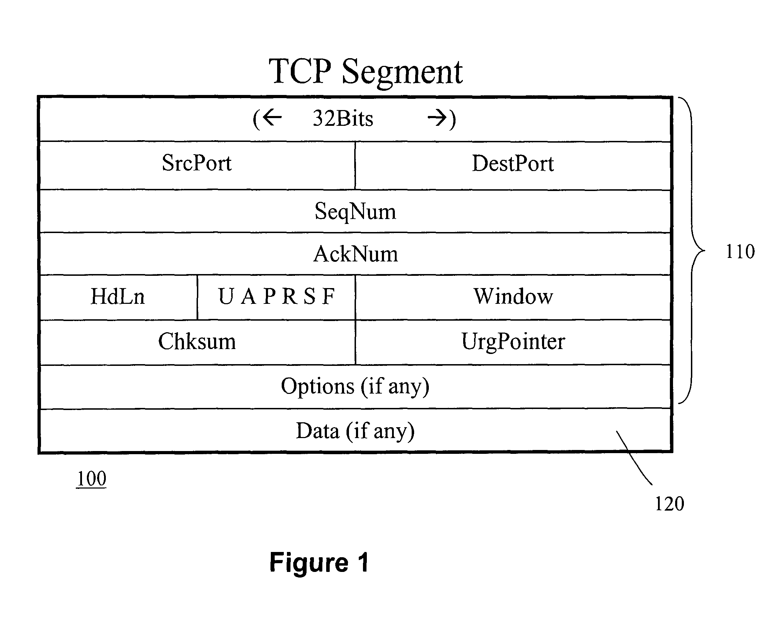

The unit of data transfer between any two hosts (i.e. client and server) in a TCP connection is commonly referred to as a TCP segment. The format of a typical TCP segment is depicted in Figure 1 and consists of a TCP header portion 110 and a TCP data portion 120. The TCP header 110 is comprised of standard fields well known to those skilled in the art. A complete description of each of these fields may be obtained from reference [1]. The TCP data portion 120 of the TCP segment contains the application data to be transmitted between two hosts in a TCP connection and is commonly referred to as payload data. The TCP header 110 fields relevant for the purposes of the description to follow will now be discussed.

The SeqNum field refers to 'sequence number' and is a 32 bit field defining the number assigned to the first byte of payload data contained within a particular TCP segment. Since TCP is a stream transport protocol, each byte of data to be transmitted is numbered in sequence. The SeqNum field tells the destination which byte in this sequence comprises the first byte of payload data in the segment. Using the SeqNum field, the destination may determine the number of the last byte of data in the segment by knowing the size of the data block contained within the TCP segment.

The AckNum field refers to acknowledgment number and is a 32-bit field defining the next sequence number that the sender of the acknowledgement is expecting to receive. For example, if the destination host for a TCP segment successfully receives byte number 'x' from the source host, it defines 'x+1' as the acknowledgment number. It will be appreciated that an acknowledgement can be sent alone in the form of an acknowledgement segment or included within a TCP segment containing data (commonly referred to in the art as piggyback acknowledgement). Furthermore, during TCP connection establishment between two hosts, each host (i.e. client and server) generates an initial sequence number (ISN) which will, of course, be different in each direction.

The UAPRSF field is a control field which defines six different control bits or flags, any one of which may be set at a given time. These control bits govern flow control, connection establishment and termination, and the mode of data transfer in TCP. Some of these flags, such as the S(SYN) flag, A(ACK) flag are used during connection establishment and some are likewise used during connection termination.

The Window field refers to 'window size' and defines the size of the window, in bytes, that the host sending the TCP segment is able to maintain. Specifically, window size determines how much data a host is willing to accept and serves as a flow control mechanism.

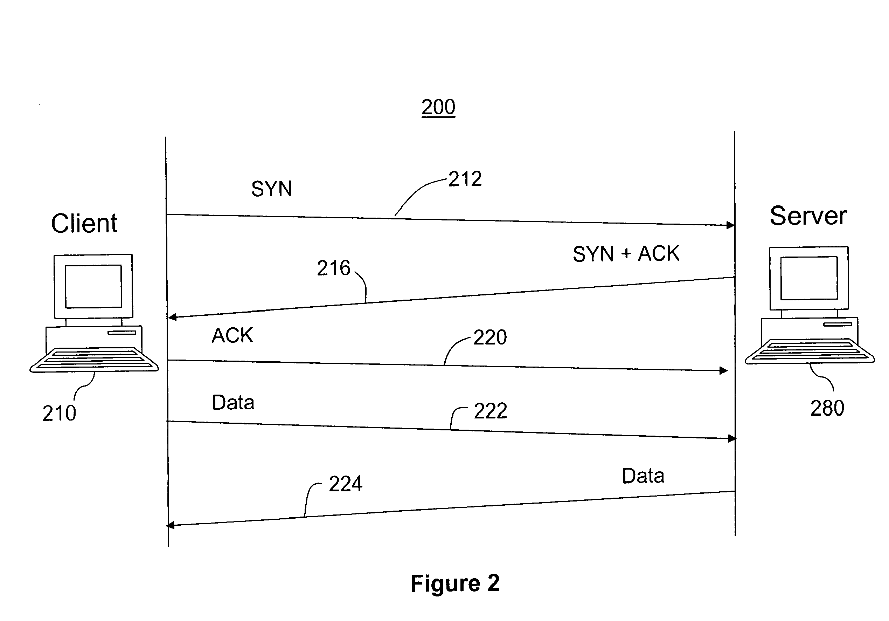

TCP is a connection-oriented protocol which establishes a virtual path between any two hosts (i.e. client and server) desiring to communicate with one another. Connection establishment in TCP is well-known and is achieved using a three-way handshaking procedure as depicted in Figure 2. In Figure 2, a Client 210 sends a SYN segment 212 to a Server 280. The SYN segment 212 has its SYN(S) flag set and the SYN segment 212 also contains the Client initialization sequence number (ISN) used for numbering bytes of data sent from the Client 210 to the server 280. The SYN segment 212 does not contain any acknowledgment number.

In response to the SYN segment 212, the Server 280 sends a SYN+ACK segment 216 back to the Client 210. The SYN+ACK segment 216 acknowledges receipt of the SYN segment 212 using the ACK(A) flag and acknowledgement number (AckNum) field. The acknowledgement number (AckNum) is the client initialization sequence number plus one. The Server 280 must also define the receive window size in the Client 210 to Server 280 direction. Furthermore, the SYN+ACK segment 216 contains an initialization sequence number (ISN) used to number the bytes sent from the server 280 to the client 210.

The client 210 responds to the SYN+ACK segment 216 with an ACK segment 220. The ACK segment 220 acknowledges receipt of the SYN+ACK segment 216 using the ACK(A) flag and acknowledgment number (AckNum) field. In this case, the acknowledgment number will be the Server initialization sequence number (ISN) plus one. In the ACK segment 220, the Client 210 also defines the receive window size in the Server 280 to Client 210 direction.

Once the above three-way handshaking procedure is completed, payload (data) containing TCP segments 222, 224 may be freely sent back and forth between the Client 210 and the Server 280 as long as the TCP connection remains established.

The increasing use of computing and communication networks for mission critical business activities has led to an increasing amount of malicious hacker activities. In order to defend computer systems and networks from this malicious activity, systems such as firewalls and intrusion detection systems have been developed. A more recent development has been the introduction of intrusion prevention systems which monitor network traffic and determine if the traffic contains malicious content. Unlike intrusion detection systems which merely indicate or sound an alarm when malicious traffic is detected, intrusion prevention systems take active measures such as dropping segments or entire connections in order to protect hosts (i.e. client and server) from suspicious traffic or attack. In some cases, however, it may be desirable to modify the application (payload) data of a segment rather than dropping the segment or entire connection in order to protect a host.

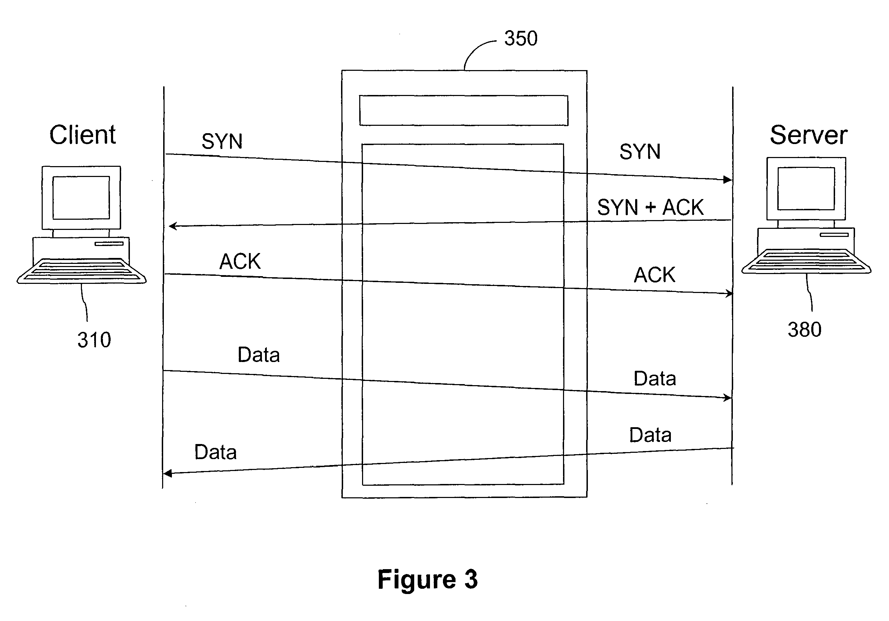

In order to optimize performance and memory utilization, intrusion prevention systems typically employ stateful packet inspection techniques, where the system does not terminate the TCP connection. Such a TCP stateful intrusion prevention implementation typically functions as depicted in Figure 3. As shown, a Client 310 and a Server 380 establish a TCP connection through an intermediate device 350. The intermediate device 350 inspects data for malicious content and will drop the TCP connection if malicious content is detected.

One of the limitations of this approach is that it is desirable, in certain cases, to modify the contents of the payload data within a TCP segment in order to protect the server or client from a malicious attack, a technique known as payload normalization. As an example, when potentially malicious character encodings are detected, they may be replaced in a way to ensure that the character encodings are not harmful to the server or the client. In order to adhere to the semantics of the TCP protocol, payload normalization actions within current intrusion prevention systems are restricted to modifying the payload data contents of a TCP segment in such a way that results in the same number of bytes being replaced (i.e. payload data length remains the same). As described in *Section 1.5.3, Replace packets with SNORT inline* of the SNORT User's Manual, Version 2.3.3, "the only catch is that the replace must be the same length as the content." The reason for this restriction is obvious in that changing payload data length will affect the sequence and acknowledgement numbering and, in some cases, require fragmentation and the sending of additional segments in cases, for example, where the payload data length a TCP segment already with maximum segment size (MSS) is increased.

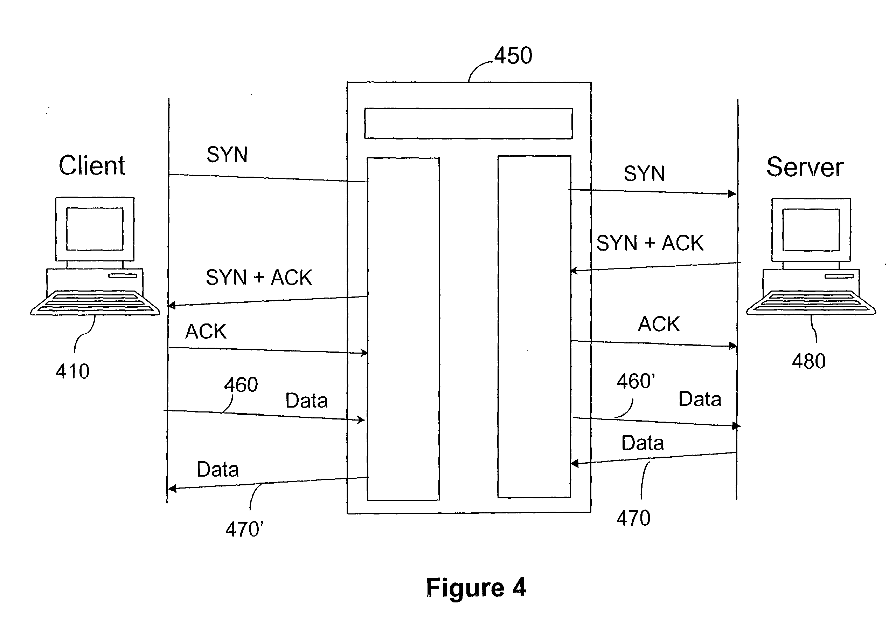

The typical approach taken to allow the payload data contents of a TCP segment to be modified flexibly, including modifications which result in a change in payload data length, is to implement an application gateway or proxy. Such an application gateway implementation is depicted generally in Figure 4 wherein a Client 410 communicates with a Server 480 via an application gateway 450. In a TCP/IP system incorporating an application gateway, a Client 410 requesting connection with a Server 480 first establishes a connection with the application gateway 450, which acts as an intermediary between the Client 410 and the Server 480. The application gateway (or proxy server) 450 is responsible for determining if the connection should be allowed and, if so, establishes a connection with the Server 480.

The application gateway 450 effectively breaks the connection between the Client 410 and the Server 480 into two TCP connections. All client-server interaction is channeled through the application gateway 450. Specifically, all communication from Client 410 to the Server 480 effectively traverses two connections i.e. Client 410 to application gateway 450 and application gateway 450 to Server 480. Similarly, all communication from the Server 480 to the Client 410 traverses two connections i.e. Server 480 to application gateway 450 and application gateway 450 to Client 410. Subsequent to connection establishment, the application gateway 450 listens for requests (data) 460 from the Client 410 and forwards the requests (data) 460' to the Server 480. The application gateway 450 receives responses (data) 470 from the Server 480 and then sends the responses (data) 470' to the client 410. In order to protect both the Client 410 and the Server 480, the application gateway 450 monitors all traffic against its rules before deciding whether or not to forward TCP segments.

The stateful filtering approach to packet inspection and modification provides distinct advantages over the application gateway approach. Stateful filtering is efficient and uses less resources (e.g. memory and processor power). It is also easier to support multiple application protocols with stateful filtering. However, as indicated above, stateful filtering cannot support modifications to the payload data length of a TCP segment. There is, therefore, a need for a mechanism for a type of TCP normalization engine which allows the payload contents of a TCP segment to be modified in length within a stateful filtering system. Specifically, a TCP normalization engine is needed which ensures that the TCP/IP protocol will be obeyed at all times in a way that allows the client and server to communicate even where the payload data length of a segment is modified by an intermediate entity or device.

### SUMMARY OF THE INVENTION

In order to overcome the deficiencies of the prior art there is provided a method to allow payload content length within a TCP session to be modified by an intermediate device (either network-based or host based). The algorithms and methods for modifying payload content are outside the scope of this patent. The underlying technique to modify the TCP segments appropriately within the TCP session (particularly sequence numbers) when payload data length has changed is covered by the present invention. The TCP Normalization Engine of the present invention may be employed in network security systems, such as intrusion prevention systems, as well as areas outside of network security such as data compression.

In accordance with one aspect of the invention there is provided, in a TCP normalization engine communicating with a source and a destination, a method of maintaining a TCP connection between the source and the destination during modification of a payload associated with a TCP segment, the method comprising: receiving the TCP segment from the source at a process incoming module; determining if the TCP segment contains payload data; if the TCP segment contains payload data, invoking a process ack module and a process seq module, wherein the process seq module processes the payload data to determine if a payload correction is required; if a payload correction is required, updating a state table and modifying the payload data to reflect the payload data correction; modifying the TCP segment with at least the modified payload data; and forwarding the modified TCP segment to the destination.

Preferably, the method further comprises: receiving in the process ack module at least an acknowledgement from the destination; determining if the acknowledgement confirms receipt of the modified payload data sent by the process seq module; if the acknowledgement confirms receipt of the modified payload data, updating the state table and modifying the acknowledgement with at least an acknowledgement number expected by the source; and forwarding the modified acknowledgement to the source.

In accordance with a second aspect of the invention, there is provided a TCP normalization engine for maintaining a TCP connection between a source and a destination when payload data associated with a TCP segment transmitted from the source to the destination is modified, the TCP normalization engine comprising: (a) a state table for storing at least: (i) an acknowledgement number expected by the source; and (ii) a modified acknowledgment number expected by the TCP normalization engine; (b) a process incoming module for receiving the TCP segment from the source and initializing the state table during establishment of the TCP connection between the source and the destination; (c) a process ack module for processing an acknowledgment number received from the destination and updating the state table accordingly; and (d) a process seq module for processing payload data contained in the received TCP segment to determine if a correction is required, modifying the payload data and associated TCP segment to reflect the correction, updating the state table and forwarding the modified TCP segment to the destination, wherein said process incoming, process ack and process seq modules interact with said state table and the destination and source to maintain the TCP connection.

Preferably, the TCP normalization engine further comprises a payload filter communicating with the process seq module and the processing and modifying of the payload data is performed by the payload filter.

The advantages of the invention are now readily apparent. Utilizing the method and apparatus of the present invention, payload data can be flexibly changed in order to remove or neutralize protocol violations or attacks. The present invention can also be used to support payload modification such as data compression or other methods which may be desirable on a TCP session.

### BRIEF DESCRIPTION OF THE DRAWINGS

A better understanding of the invention will be obtained by considering the detailed description below, with reference to the following drawings in which:
Figure 1 depicts the typical format of a TCP segment;
Figure 2 depicts connection establishment between a client and a server for a typical TCP connection;
Figure 3 depicts a typical TCP connection employing an intermediate device between a client and a server to perform stateful TCP packet inspection of network traffic;
Figure 4 depicts a typical TCP connection employing an application gateway or proxy between a client and a server;
Figure 5 depicts a TCP connection employing an intermediate device between a client and a server that incorporates a TCP Normalization Engine according to the present invention;
Figure 6 depicts the general format of a Connection Table used in conjunction with the present invention;
Figure 6A depicts the general format of a Not Filtered Queue (NFQ) used in conjunction with the present invention;
Figure 7 depicts the general format of a Not Acknowledged Queue (NACKQ) used in conjunction with the present invention;
Figure 8 depicts the general format of a Not Sent Queue (NSQ) used in conjunction with the present invention;
Figure 9 depicts four possible states that may exist prior to and during establishment of a TCP connection;
Figure 10 is a flowchart depicting a first subset of actions performed by the TCP Normalization Engine of the present invention;
Figure 11 is a flowchart depicting a second subset of actions performed by the TCP Normalization Engine of the present invention; and
Figure 12 is a diagram depicting various implementations of the TCP Normalization Engine of the present invention within a TCP connection between a client and a server.

### DESCRIPTION OF THE PREFERRED EMBODIMENT

The present invention allows the payload data of a TCP segment to be modified and, specifically, changed in length by an intermediate device during a TCP connection between any two hosts while adhering to the semantics of the TCP protocol so that the TCP connected may be maintained.

In order for an intermediate device to modify the payload data length of a TCP segment without interrupting an active TCP connection, either by reducing or increasing the payload data length, the intermediate device must ensure that all the protocol rules of TCP are obeyed thereby ensuring that the client and server communicating via the TCP connection may continue to do so, seamlessly. The TCP Normalization Engine of the present invention ensures that the TCP protocol is obeyed in a way that allows the client and server to maintain their connection even when payload data length is modified. The TCP Normalization engine may reside on any "intermediate device" situated between the client and server of a TCP connection, including within the protocol stack of the client or server itself.

In order to implement such a scheme, it will be appreciated that a number of challenging conditions must be addressed. The sequence numbers (SeqNum) and acknowledgment numbers (AckNum) sent within standard TCP segment headers from the client to the server or from the server to the client must be appropriately altered to reflect changes in payload data length (i.e. as a result of data which has been added or removed by payload filtering). Multiple segments may need to be created when a given modification of payload data length causes the maximum segment size (MSS) to be exceeded. Finally, TCP segments containing payload data that are re-transmitted (for any reason) by the client or the server must be dealt with in an appropriate manner, ensuring that any modifications which had been made to the original TCP segment are reflected, accordingly. As will be described in detail below, the TCP Normalization Engine of the present invention uses a type of state table referred to throughout the remainder of the description as a 'Connection Table' in order to store and keep track of the relevant data required to perform the above actions.

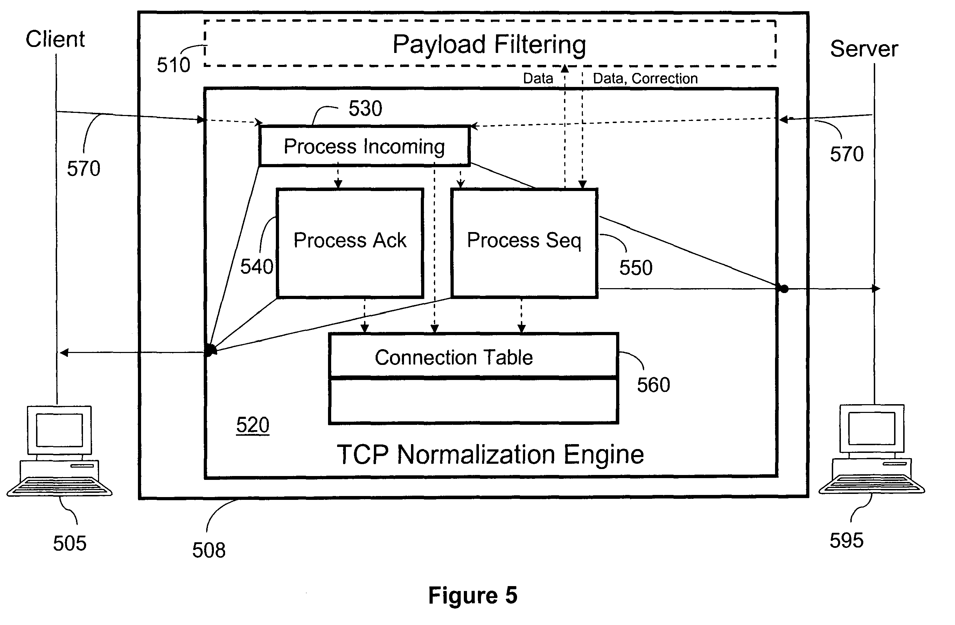

Figure 5 is a high level system diagram of a stateful TCP filtering implementation 500 incorporating the TCP Normalization Engine of the present invention. In Figure 5, a Client 505 and a Server 595 desire to communicate with one another by establishing a TCP connection. Communication between the Client 505 and the Server 595 is channeled through an intermediate device 508, as shown. The intermediate device 508 is responsible for receiving TCP segments sent by the Client 505, inspecting and, if necessary, filtering the TCP segments and then forwarding the TCP segments on to the Server 595. The intermediate device 508 is also responsible for receiving TCP segments sent by the Server 595, inspecting and, if necessary, filtering the TCP segments and then forwarding the TCP segments on to the Client 505.

As discussed earlier, the filtering of the TCP segments by the intermediate device 508 may or may not involve modifying the payload data length of a particular TCP segment. In addition to effecting payload data filtering of TCP segments, the intermediate device 508 ensures that the TCP protocol is obeyed in a way that allows the Client 505 and Server 595 to maintain an active TCP connection in cases where payload data length of a TCP segment may be modified. In order to accomplish all of the above, the intermediate device 508 is comprised of two main modules, namely a Payload Filtering module 510 and a TCP Normalization Engine 520.

The Payload Filtering module 510 may operate on the payload data of a TCP segment in any number of ways including modifying the contents and, correspondingly, length of the payload data, to protect the Client 505 or the Server 595 from potentially malicious or suspicious data. An additional type of modification resulting in a change of payload data length is data compression. It will be appreciated that the Payload Filtering module 510 in Figure 5 may be implemented by adapting any one or combination of widely available payload filtering algorithms known in the art. Thus, the remainder of the description pertains to the inventive TCP Normalization Engine 520.

The TCP normalization engine 520 is comprised of three main processing modules, namely a Process Incoming module 530, Process Ack module 540 and a Process Seq module 550. The processing modules 530, 540 and 550 interact with and operate on a Connection Table 560 as indicated by the dashed lines from each processing module 530, 540 and 550 to the Connection Table 560. As mentioned earlier, the Connection Table 560 is a type of state table, the details of which are fully described below. The Process Incoming module 530 is responsible for initializing the Connection Table 560 during connection establishment between the Client 505 and the Server 595 (i.e. seeding the Connection Table 560 with appropriate values). Specifically, the Process Incoming module 530 ensures that the Initial Sequence Number and Window size values generated during connection establishment are stored in the Connection Table for the TCP connection.

As indicated by arrows 570 in Figure 5, an incoming TCP segment sent from the Client 505 to the server 595 or from the server 595 to the client 505 arrives at Processing Incoming module 530. If the TCP connection has already been established, the Process Incoming module 530 invokes both the Process Ack module 540 and Process Seq module 550 when the incoming TCP segment includes payload data. When the incoming TCP segment does not include payload data (i.e. the incoming TCP segment is only an acknowledgement), then only the Process Ack module 540 is invoked.

The Process Seq module 550 is responsible for forwarding the TCP segment to the Payload Filtering module 510 whereby the original payload data contents of the TCP segment are inspected and, if necessary, modified (including being filtered for anomalies or suspicious content). This may or may not result in a change in the payload data length of the TCP segment. The Payload Filtering module 510 returns the filtered TCP segment to the Process Seq module 550. Depending on the type of filtering performed, the Payload Filtering module 510 may also store the original payload data for the TCP segment, and may return a TCP segment with an empty payload. In the case where payload data length of a TCP segment is modified (i.e. either increased or decreased) by the Payload Filtering module 510, a correction field corresponding to the number of bytes by which the payload data length has increased or decreased is provided to the Process Seq module 550 along with the filtered TCP segment. The actions undertaken by each of the three processing modules 530, 540 and 550 comprising the TCP Normalization Engine 520 of the present invention will be described following a brief discussion of the format of the Connection Table 560 given below.

The Connection Table 560 is a state table stored in memory that is dynamically updated by the Process Incoming 530, Process Ack 540 and Process Seq modules 550. The Connection Table 560 comprises a series of fields for each active TCP connection and is responsible for storing the relevant information in order to update sequence numbers and acknowledgement numbers correctly during a TCP connection in which payload data length of TCP segments may be modified. The Connection Table 560 also stores TCP segment information, either entire TCP segments or portions of TCP segments in order to provide input for evaluating different conditions.

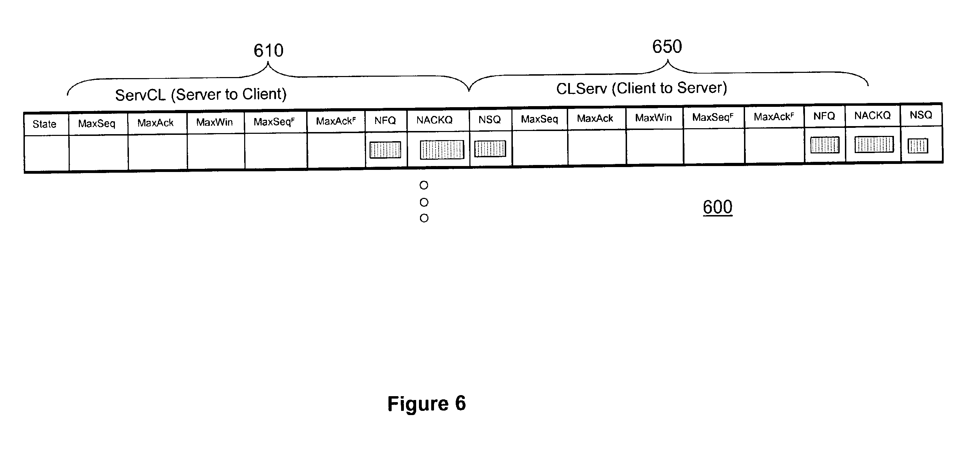

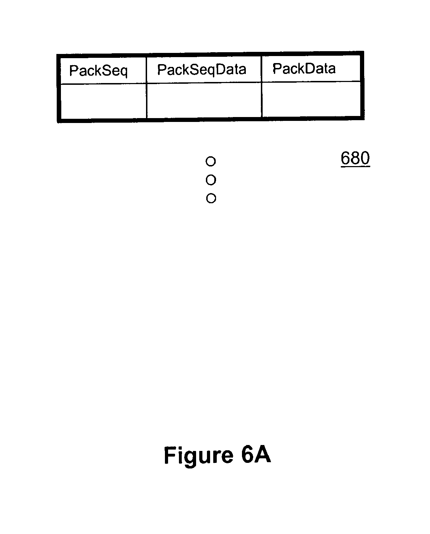

Figure 6 depicts the format of an exemplary Connection Table 600 in accordance with the present invention. For each active connection between the Client 505 and the Server 595, two sets of entries must be maintained and updated. A first set of entries 610 corresponds to TCP segments traveling in the Server-Client direction (ServCL) and a second set of entries 650 corresponds to TCP segments traveling in the Client-Server (CLServ) direction. As seen, both sets of entries 610 and 650 have identical fields but apply to packets traveling in different directions on the active TCP connection. For each direction, the Connection Table 600 comprises eight fields as defined below:

| | | |
|---|---|---|
| State | - | Connection State |
| MaxAck | - | Last Acknowledgment Number received |
| MaxWin | - | Maximum Window Size |
| MaxSeq | - | Most recent sequence number received + length of payload data. This is also the expected maximum acknowledgment number (to be received by the source) corresponding to an unfiltered segment. |
| MaxAck^{F} | - | Last Acknowledgment Number *filtered* (this is the acknowledgment number received for the filtered segment) |
| MaxSeq^{F} | - | Last sequence number sent + length of payload data including correction (this is also the expected maximum acknowledgment number to be received for a filtered segment) |
| NFQ | - | Not Filtered Queue |
| NACKQ | - | Not Acknowledged Queue |
| NSQ | - | Not Sent Queue |

Since the sequence numbers and acknowledgments numbers on either side of the TCP connection will not match if payload data length of a given TCP segment has been modified, values for the sequence and acknowledgement numbers before filtering (MaxAck, MaxSeq) and after filtering (MaxAck^{F}, MaxSeq^{F}) are stored in the Connection Table 560.

The Not Filtered Queue (NFQ) is a queue used to buffer TCP segments received out of order and that should not be sent to the Payload Filtering module 510 until the previous TCP segments required are received. Once TCP segment ordering has been restored, all of the segments in the NFQ are filtered. An exemplary listing 680 of pertinent fields retained for each respective entry in the NFQ is shown Figure 6A. These fields are defined below as follows:

| | | |
|---|---|---|
| PackSeq | - | Received sequence number (before filtering) |
| PackSeqData | - | Received sequence number + payload data length |
| PackData | - | payload data of a received TCP segment |

The Not Acknowledged Queue (NACKQ) referred to above is a queue of entries which stores an entry for each respective TCP segment that is received from a source (i.e. client or server), processed by the TCP Normalization Engine 520 and then sent to its destination (i.e. server or client) but that has not yet been fully acknowledged. The NACKQ is used to retain a history of TCP segments that have been filtered and forwarded by the Intermediate Device 508 (i.e. from the TCP normalization engine 520 to the Server 595 or from the TCP normalization engine 520 to the Client 505) and is particularly needed in the situation where there is a re-transmission of TCP segment(s) by the Client 505 or the Server 595. Specifically, when such a re-transmission occurs, the TCP Normalization Engine 520 must ensure that the payload data resent to the destination matches with that which was previously sent. It will be appreciated that two NACKQs should exist due to the bidirectional nature of communication in a TCP connection. A NACKQ entry corresponding to a filtered and forwarded TCP segment can only be removed from its respective queue when both receipt of the forwarded TCP segment has been acknowledged at the local end (i.e. TCP Normalization Engine) by the destination and when an appropriate acknowledgment (confirming receipt of the original TCP segment by the destination) has been received by the original source of the TCP segment. The TCP Normalization Engine 520 infers that the latter acknowledgment has been received by the source when it receives an acknowledgment number from the source which acknowledges the sequence number of a TCP SEQ Data segment sent to the source which has been used to piggyback the latter acknowledgment.

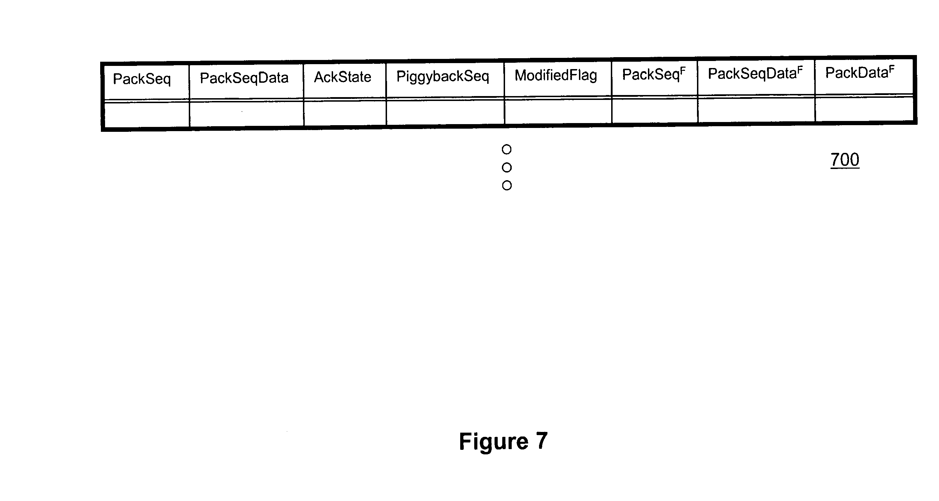

Figure 7 depicts an exemplary listing 700 of pertinent fields retained for each respective entry in the NACKQ. The pertinent fields are defined below:

| | |
|---|---|
| PackSeq | - Received sequence number (before filtering) |
| PackSeqData | - Received sequence number + payload data length (before filtering) |
| AckState | - Has the packet been acknowledged at the local end (No, Local, Remote) |
| PiggybackSeq | - Sequence number of TCP segment to remote which contains acknowledgment |
| ModifiedFlag | - Indicates if payload contents were modified or not (0 for no modification, 1 for modification) |
| PackSeq^{F} | - Updated (filtered) sequence number |
| PackSeqData^{F} | - Updated (filtered) sequence number + payload data length + correction |
| PackData^{F} | - Filtered data contents |

The ModifiedFlag is set to one if payload filtering modifies the contents of the payload data. It is set to zero otherwise.

An important aspect relating to operation of the NACKQ is that a given entry in the NACKQ may only be removed when an acknowledgement to the filtered TCP segment is received from the local end (i.e. destination of the TCP segment) as well as confirmation being received that a corresponding acknowledgement has been received by the remote end (source of the original TCP segment). Such a 'full' acknowledgment implies that no re-transmission of the original TCP segment will occur. The AckState field in the NACKQ is used to track whether a local acknowledgement has been received while the PiggybackSeq field is used to track the acknowledgement number from the remote end which, when received, will cause an entry in the NACKQ to be removed.

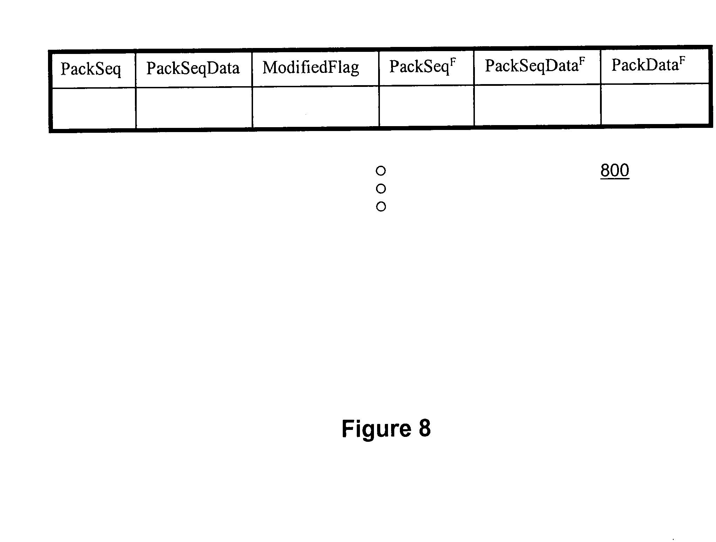

The Not Sent Queue (NSQ) is a queue used to buffer filtered TCP segments received from the Payload Filtering module 510 when required i.e. before they are forwarded from the TCP normalization engine 520 to the intended destination (i.e. the Server 595 or the Client 505). For example, if the window at the destination is not large enough to receive a filtered TCP segment from the TCP normalization engine 520, the filtered TCP segment is queued in the NSQ until the window at the destination is capable of receiving it. It will be appreciated that the NSQ works using the first-in-first-out (FIFO) principle. It will further be appreciated that two NSQs exist due to the bidirectional nature of communication in a TCP connection. Specifically, a first NSQ is used to buffer packets being sent in the Client-Server direction (CLServ) from the TCP normalization engine 520 to the Server 595 while a second NSQ is used to buffer packets being sent in the Server-Client direction (ServCL) from the TCP normalization engine 520 to the Client 505. An exemplary listing 800 of pertinent fields retained for each respective entry in the NSQ is shown Figure 8. These fields are defined below as follows:

| | | |
|---|---|---|
| PackSeq | - | Received sequence number (before filtering) |
| PackSeqData | - | Received sequence number + payload data length |
| PackSeq^{F} | - | Updated (filtered) sequence number |
| PackSeqData^{F} | - | Updated (filtered) sequence number + payload data length + correction |
| PackData^{F} | - | payload data of a filtered TCP segment |
| ModifiedFlag | - | Indicates if payload contents were modified or not |

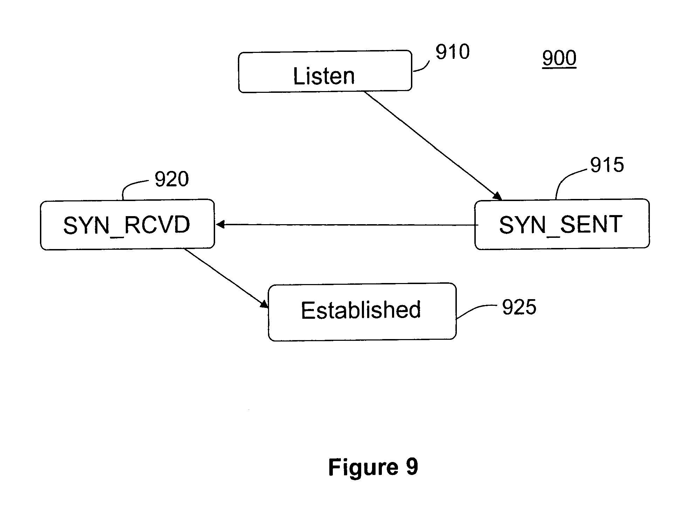

It will be appreciated that, in a typical TCP Client-Server environment, any one of a plurality of connection states may exist at a given time. For example, Figure 9 depicts four such possible connection states which may exist prior to or during the three-way handshaking procedure used to establish a TCP connection between two TCP hosts. The order of occurrence of these four connection states is indicated by directional arrows between each state. The possible connection states are well known to those skilled in the art and comprise a Listen state 910, a SYN_SENT state 915, a SYN_RCVD state 920 and an Established state 925. Of course, these four connection states also apply to the TCP Client-Server environment depicted in Figure 5. Specifically, in the LISTEN state 910, the Server 595 is waiting for calls (i.e. connection requests) from the Client 505. In the SYN_SENT state 915, a connection request has been sent from the Client 505 to the Server 595 and the Client 505 is waiting for an acknowledgment from the Server 595. In the SYN_RCVD state 920, a connection request from the Client 505 has been received by the Server 595. Finally, in the ESTABLISHED state 925, a TCP connection between the Client 505 and the Server 595 has been established. Of course, a Closed state (not shown in Figure 9) will exist when there is no connection.

It will also be understood by those skilled in the art that any one of the two parties at either end of an established TCP connection (i.e. the Client 505 or the Server 595) can terminate the connection. Connection termination is achieved using a 'four-way handshaking' procedure well known to those skilled in the art. The termination of a TCP connection is outside the scope of this invention and will not be discussed. For the purposes of the following description, once a TCP connection has been terminated, the entries corresponding to the TCP connection are removed from the Connection Table 560.

Referring back to Figure 5, incoming TCP segments from a source are initially received by the Process Incoming module 530 of the TCP Normalization Engine 530. For example, the incoming TCP segments may be TCP segments arriving from the Client 505 whose destination is the Server 595 or, alternatively, TCP segments arriving from the Server 595 whose destination is the Client 505. If the Connection State (State) has already been ESTABLISHED (i.e. a connection between the Client 505 and Server 595 has previously been established using the well known three-way handshaking procedure), the Process Ack module 540 and the Process Seq module 550 are invoked, in that order. However, if the Connection State has not yet been ESTABLISHED (i.e. Connection State is in any of the LISTEN, SYN_SENT or SYN_RCVD states), the Connection Table 560 must be initialized (or seeded) with appropriate values as detailed below.

The Process Incoming module 530 of the TCP normalization engine 520 is responsible for initializing the Connection Table 560 during connection establishment. To illustrate this process, consider that an incoming TCP segment to the Process Incoming module 530 is a TCP segment with SYN flag set (i.e. a SYN segment) that is sent from the Client 505 to the Server 595 to initiate connection establishment. Such a SYN segment announces the wish of the Client 505 to connect to the Server 595 and includes initialization information about the data to be sent from the Client 505 to the Server 595. Specifically, the SYN segment will contain the Client initialization sequence number (ISN) in the SeqNum field that is ordinarily used for numbering bytes of payload data sent from the Client 505 to the Server 595. The appropriate CLServ values 650 in the Connection Table 600 of Figure 6 are initialized as follows: CLServ.MaxSeq = SeqNum(ISN)+1; CLServ.MaxSeq^{F} = SeqNum(ISN)+1; and State (Connection State) is set to SYN_SENT. After the appropriate CLServ values 650 are initialized, the SYN segment is forwarded to the Server 595.

In reply to the SYN segment, the next incoming TCP segment to the Process Incoming Module 530 will typically be a SYN+ACK segment sent from the Server 595 to the Client 505 having both SYN and ACK flags set. The SYN+ACK segment acknowledges receipt of the SYN segment (or connection request) from the Client 505 using the AckNum field (i.e. AckNum equals the Client ISN plus one) and includes initialization information from the Server 595. The SYN+ACK segment also contains the Server initialization sequence number (ISN) that is used to number the bytes of payload data sent from the Server 595 to the Client 505. Appropriate ServCL values 610 in the Connection Table 600 of Figure 6 are initialized as follows: ServCL.MaxSeq = SeqNum(ISN)+1; ServCL.MaxAck=AckNum; ServCL.MaxWin=Window; ServCL.MaxSeq^{F} = SeqNum(ISN)+1; ServCL.MaxAck^{F} = AckNum; and State (Connection State) is set to SYN_RCVD. After the appropriate ServCL values are initialized, the SYN+ACK segment is forwarded to the Client 505.

To complete TCP connection establishment, the next incoming TCP segment to the Process Incoming module 530 will typically be an ACK segment that is sent from the Client 505 to the Server 595. As per the well known three-way handshaking protocol governing TCP connection establishment, the ACK segment acknowledges receipt by the Client 505 of the SYN+ACK segment sent from the Server 595 and sets its AckNum field to the received SeqNum(i.e. Server ISN) + 1. Appropriate CLServ values 610 in the Connection Table 600 of Figure 6 are updated as follows: CLServ.MaxAck=AckNum; CLServ.MaxAck^{F}=AckNum; CLServ.MaxWin=Window; and State (Connection State) is set to ESTABLISHED. The ACK segment is then forwarded to the Server 595. A TCP connection between the Client 505 and the Server 595 has now been established and initialization of the entry for this connection in the Connection Table 600 has been completed.

Once a TCP connection between the Client 505 and the Server 595 has been established, it will be understood that two types of TCP segments may be exchanged between source and destination: TCP segments containing payload data (referred to as SEQ Data segments) which may contain acknowledgements as well as payload data and TCP segments containing acknowledgements only (referred to as ACK segments). When a TCP segment containing payload data (i.e. SEQ Data segment) is received by the TCP Normalization Engine 520, then the Process Ack module 540 and the Process Seq module 550 in Figure 5 are invoked, in that order. However, when an acknowledgment only TCP segment (i.e. ACK segment) is received by the TCP Normalization Engine 520, then only the Process Ack module 540 is invoked. Details of the actions performed by the Process Ack module 540 and the Process Seq module 550 are discussed below, beginning with the Process Seq module 550.

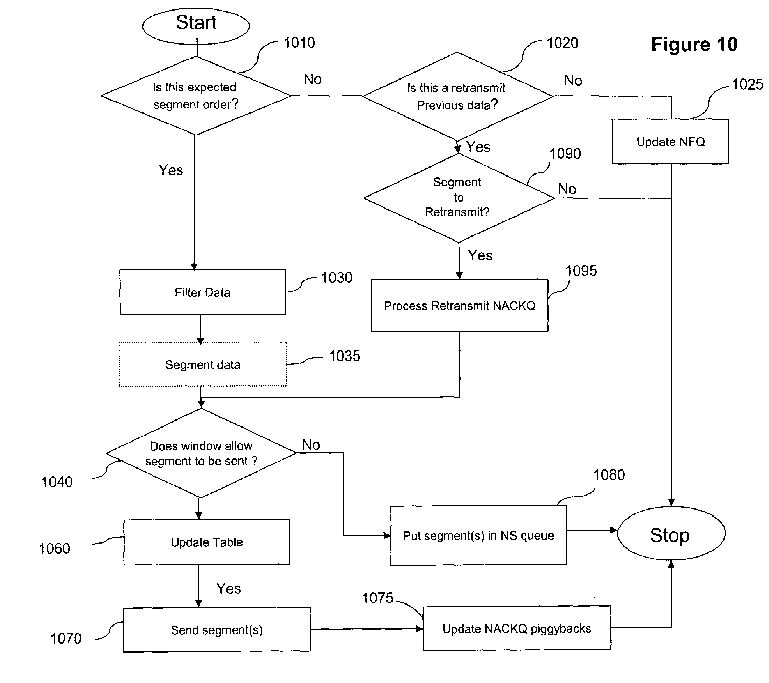

The Process Seq module 550 of the TCP normalization engine 520 is responsible for processing the sequence number (SeqNum) and payload data for an incoming TCP segment. A high level overview of the operation of the Process Seq module 550 is illustrated by the flowchart in Figure 10.

Referring to Figure 10, the Process Seq module 550 begins with a decision step 1010, wherein the incoming TCP segment is evaluated to determine if it is the next 'expected' TCP data segment. The decision step 1010 is implemented by checking if the incoming TCP segment sequence number (SeqNum) + payload data length is equal to MaxSeq, or the most recently received sequence number + payload data length. If this is case, the incoming TCP data segment is the next expected TCP data segment. This TCP data segment, along with any other segment in the NFQ (which had been received previously and queued because they were out of order) can now be filtered by invoking step 1030.

If the incoming TCP segment is not the next expected TCP data segment, the incoming TCP segment may be a retransmission of data that has previously been received by the TCP normalization engine 520 but for which the source of the incoming TCP segment has not received an acknowledgment (e.g. the Client 505 hasn't received an acknowledgment for a TCP segment and thinking that the Server 595 did not receive the TCP segment, resends the TCP segment). Such a condition is evaluated as indicated by a decision step 1020. Specifically, decision step 1020 evaluates if the incoming TCP segment sequence number (SeqNum) + payload data length is less than MaxSeq, or the most recently received sequence number + payload data length. In this is the case, a decision step 1090 is invoked to determine if the TCP segment should be re-transmitted. If it is determined that the TCP segment should be re-transmitted, then a Process Retransmit NACKQ step 1095 is invoked, the details of which are described below. Finally, if the incoming TCP segment is determined to not be the next expected TCP data segment and the TCP segment is not a re-transmission of data, then this TCP segment is an out-of-order data segment. Accordingly, such a TCP segment is added to the NFQ as indicated by Update NFQ step 1025 and processing of this segment is complete, without updates to any other fields within the Connection Table 600.

In the Filter Data step 1030, the incoming TCP segment(s) are forwarded to the Payload Filtering module 510 for filtering. The Payload Filtering module 510 employs payload filtering algorithm(s) to inspect and possibly modify the original payload contents of the incoming TCP segment. The payload inspection and filtering process conducted by the Payload Filtering module 510 may result in a filtered TCP segment having the original payload data length or a filtered TCP segment having a payload data length that has been increased or decreased in comparison to the original payload data length of the incoming TCP segment. It may also be the case that the Payload Filtering module 510 returns a filtered TCP segment having a payload data length of zero bytes, if it requires the receipt of additional TCP segments to perform its filtering action. In general, the output of the Payload Filtering module 510 is comprised of a filtered TCP segment containing filtered payload data and a correction value indicating the number of bytes that were added to or removed from the original payload data of the incoming TCP segment. The output of the Payload Filtering module 510 is returned to the Process Seq module 550.

Subsequent to Filter Data step 1030, the Process Seq module 550 implements a Segment data step 1035 which evaluates if the filtered TCP segment size exceeds the maximum segment size (MSS). If so, the filtered TCP segment must be broken into multiple TCP segments.

Next, in decision step 1040, an evaluation is made as to whether the window at the destination is able to receive the filtered TCP segment. If the NSQ is currently empty and if the payload data length of the filtered TCP segment (i.e. original payload data length +correction) is less than the current window size (MaxWin) at the destination, the destination window is open and is able to receive a TCP segment of this size. In this case, the Connection Table is updated as indicated in step 1060 and the filtered TCP segment is forwarded to the destination by invoking step 1070 which sends the filtered TCP segment. If the above condition is not satisfied, the destination window is not open and an entry corresponding to the filtered TCP segment is placed in the NSQ (Not Sent Queue) as indicated by step 1080. It will be appreciated that if the NSQ for this connection direction already has an entry as stated above, then the destination window is closed to a point where a TCP data segment has already been queued, and any newly filtered TCP segment(s) should also be queued. In this respect, step 1080 is invoked to place the filtered TCP segment(s) in the NSQ.

As mentioned above, the Update Connection Table step 1060 and the Send segment(s) step 1070 are invoked when the window at the destination is open to receive the filtered TCP segment(s). The Update Connection Table step 1060 consists of making the following updates to the Connection Table 6: MaxSeq= SeqNum+payload data length, an entry corresponding to the filtered TCP segment is placed in the NACKQ with PackSeq=SeqNum; PackSeqData=PackSeq+payload data length; AckState=No, PackSeq^{F}=MaxSeq^{F}, PackSeqData^{F}=(PackSeq^{F} + payload data length + correction), and ModifiedFlag=0 if the original payload data length of the incoming TCP segment was not changed as a result of filtering. If payload data contents was modified in Filter Data step 1030, then the following additional update is made to the NACKQ entry: ModifiedFlag is set to 1. Once the NACKQ entry has been made as indicated above, then MaxSeq^{F} is set equal to PackSeqData^{F}. The filtered TCP segment is then sent to the destination as indicated in step 1070 with header values SeqNum=PackSeq^{F}, AckNum=MaxAck^{F}, Window= MaxWin.

The Send segment(s) step 1070 is followed by an Update NACKQ piggybacks step 1075. The Update NACKQ piggybacks step 1075 is invoked to update any Remote NACKQ entries. The Remote NACKQ corresponds to the NACKQ in the opposite connection direction i.e. for a TCP SEQ Data segment sent to the Client, it is the CLServ NACKQ which is the Remote NACKQ and which is updated. Specifically, any entry in the NACKQ which has AckState=Local and whose PackSeq is acknowledged by AckNum in the TCP segment sent in step 1070 is updated. The entry is updated by setting AckState field to Remote and by setting the PiggybackSeq field to the SeqNum in the TCP segment sent in step 1070. This allows a Process NACKQ step 1155 in the Process Ack module 540 (to be discussed below) to remove entries from the NACKQ when an acknowledgement is received which acknowledges the sequence number stored in the PiggybackSeq field.

If the window at the destination is not able to receive the filtered TCP segment(s), an entry corresponding to the filtered TCP segment(s) is placed in the NSQ as indicated in step 1080. Specifically, an entry corresponding to the filtered TCP segment is added to the NSQ with values: PackSeq=SeqNum, PackSeqData= PackSeq+ payload data length, PackSeq^{F}=MaxSeq^{F}, PackSeqData^{F}=(PackSeq^{F}+ original payload data length + correction), and PackData^{F}= filtered payload data (whether it was modified or not).

Referring back to decision step 1020, if it has been determined that the incoming TCP segment is a retransmission of data that has previously been received by the TCP normalization engine 520, decision step 1090 is invoked to determine if the TCP segment should be re-transmitted. Decision step 1090 ensures that when the TCP Normalization Engine 520 receives an incoming TCP data segment that has been received before (i.e. a retransmission from the source), the data corresponding to this TCP segment in the NACKQ will only be re-sent to the destination if it has not already been 'locally' acknowledged by the destination. The determination of which NACKQ entries should be re-transmitted is done by checking each NACKQ entry with has AckState=No and evaluating if the sequence of bytes between SeqNum and SeqNum+payload data length of the incoming TCP segment overlaps with the range of data between PackSeq and PackSeqData for a given entry. If there is an overlap then the portion of overlap is re-transmitted as indicated by Process Retransmit NACKQ step 1095. Otherwise, the TCP segment is dropped. This may be the case, for example, if the data from this TCP segment is still in the NSQ and waiting to be sent due to the destination window being closed.

The Process Retransmit NACKQ step 1095 processes any NACKQ entries which overlap the payload data of a retransmitted TCP segment. The overlap may consist of part of a NACKQ entry, an entire entry, or multiple entries. The contents of PackData^{F} from the NACKQ which overlaps the retransmitted TCP segment is attempted to be re-sent by invoking step 1040, as indicated in Figure 10 and described earlier.

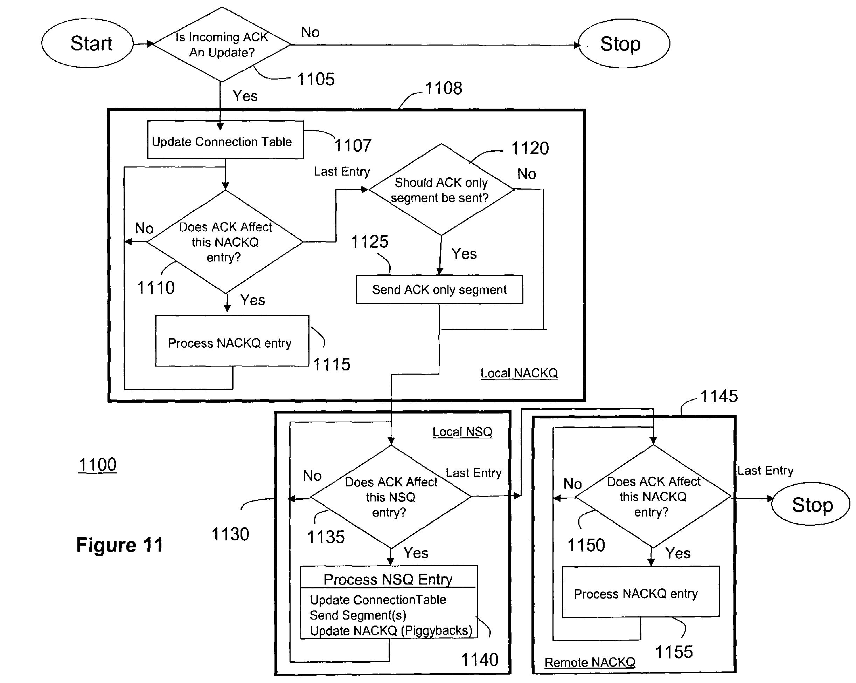

Referring back to Figure 5, the TCP normalization engine 520 is also comprised of a Process Ack module 540 which is responsible for processing the acknowledgment number (AckNum) for an incoming TCP segment. As previously mentioned, an incoming TCP segment may be a SEQ Data segment containing payload data or simply an ACK only segment. The operation of the Process Ack module 540 is summarized generally by the flowchart in Figure 11.

Referring to Figure 11, the Process Ack module 540 begins with decision step 1105 which is responsible for determining if the acknowledgment number contained within an incoming TCP segment is an update to previously received acknowledgements. If the incoming acknowledgement number is less than or equal to a previously received acknowledgement number (MaxAck), the incoming acknowledgment is ignored and processing of the acknowledgement is complete. This may occur, for example, when the acknowledgment is either a repeat of a previously received acknowledgment or when an out of order acknowledgment received has already been processed which included this acknowledgment. If the incoming acknowledgment number is an update to a previously received acknowledgement and is less than or equal to the most recent sequence number sent+length of payload data (i.e. MaxSeq^{F}), then it is an updated and valid acknowledgement and Process Local NACKQ submodule 1108 is invoked, the details of which are described below. If the acknowledgment number contained within the incoming TCP segment does not meet the above condition of being less than or equal to MaxSeq^{F}, then the acknowledgment number is invalid, the TCP connection is dropped and processing of the acknowledgment is complete. It will be appreciated that the latter is an error condition, likely due to starting the system in the middle of a connection.

If the acknowledgment number of the incoming TCP segment contains an update and is valid, the Connection Table is updated for this incoming acknowledgment as indicated by step 1107. Specifically, the MaxAck^{F} field is set to the AckNum field of the incoming TCP segment and the MaxWin field is set to the Window field of the incoming TCP segment. As indicated by decision step 1110 and Process NACKQ entry step 1115, the Process Local NACKQ submodule 1108 then processes each entry in the 'Local' NACKQ. The Local NACKQ is the NACKQ in the direction toward the source of the acknowledgment. Specifically, for an acknowledgement received from the Server 595, the Local NACKQ will be the CLServ NACKQ. Similarly, for an acknowledgment received from the Client 505, the Local NACKQ will be the ServCL NACKQ.

Decision step 1110 determines if a particular entry in the Local NACKQ is affected by the incoming or received acknowledgment number (i.e. the acknowledgment number contained within the incoming TCP segment). In order for a NACKQ entry to be affected by the incoming (received) acknowledgement number, the NACKQ entry must have AckState=No and the incoming acknowledgement number must acknowledge some or all of the data associate with the TCP segment corresponding to the NACKQ entry (i.e. PackSeq^{F} < AckNum <=PackSeqData^{F}). If some or all of the data is acknowledged, a Process NACKQ entry step 1115 is invoked.

The Process NACKQ entry step 1115 results in the AckState being set to Local for the particular NACKQ entry(ies) in question. It will be appreciated that if only a portion of the data associated with a given NACKQ entry is acknowledged, then the NACKQ entry is adjusted to account for this partial acknowledgement, by removing the data which was acknowledged, and updating the PackSeq, PackSeqData, PackSeq^{F}, PackSeqData^{F} and PackData^{F} fields accordingly. Once a NACKQ entry is processed, the MaxAck field is updated by setting it to PackSeqData. Once all the entries in the Local NACKQ have been evaluated, decision step 1120 is invoked to determine if an ACK only segment should be sent.

Decision step 1120 determines if an ACK only segment should be sent. In other words, decision step 1120 determines if the incoming TCP segment is an acknowledgement only segment. If the payload data length of an incoming TCP segment is zero (i.e. the incoming TCP segment has no data bytes or payload), then this is an ACK only segment and, correspondingly, an ACK only segment is sent out by the TCP Normalization Engine as indicated in step 1125 with AckNum = MaxAck. Following the Send ACK only segment step 1125, a Process Local NSQ submodule 1130 is invoked. If the incoming TCP segment contains payload data, it is not an ACK only segment and an ACK only segment should not be sent. Instead, the Process Local NSQ submodule 1130 is directly invoked.

The Process Local NSQ submodule 1130 is comprised of a decision step 1135 and a Process NSQ entry step 1140. The Process Local NSQ submodule 1130 processes each entry in the 'Local' NSQ i.e. the NSQ in the direction toward the source of the acknowledgement. Specifically, for an acknowledgement received from the Server 595, the Local NSQ will be the CLServ.NSQ. Similarly, for an acknowledgment received from the Client 505, the Local NSQ will be the ServCL.NSQ.

Decision step 1135 determines if a particular entry in the Local NSQ is affected by the incoming or received acknowledgment number (i.e. the acknowledgment number contained within the incoming TCP segment). Specifically, each entry in the Local NSQ is checked to determine if there are any unsent TCP segments in the NSQ which can now be sent because of the destination window size having increased due to the receipt of the incoming acknowledgement number from the destination. For each NSQ entry, if the destination window size has now been increased sufficiently to allow the particular TCP segment associated with the NSQ entry to be sent, the Process NSQ entry step 1140 is invoked. If, however, the above evaluation is false, the next entry in the local NSQ is evaluated and so on and so forth.

The Process NSQ entry step 1140 sends the TCP segment that is now allowed to be sent due to the destination window size having been increased. The TCP segment is removed from the NSQ and sent. The required Connection Table updates are identical to those described in relation to steps 1060 (Update Connection Table), 1070 (Send segment) and 1075 (Update NACKQ piggybacks) for the Process Seq Module in Figure 10. Once all entries in the Local NSQ have been evaluated in this manner, the Process Ack module 540 invokes a Process Remote NACKQ submodule 1145.

The Process Remote NACKQ submodule 1145 is responsible for evaluating each entry in a 'Remote' NACKQ to determine if it is affected by the incoming acknowledgment. The Remote NACKQ is defined as the NACKQ in the direction away from where the incoming acknowledgment is received. For example, for an acknowledgement received from the Server 595, the Remote NACKQ is the ServCL NACKQ. Similarly, for an acknowledgment received from the Client 505, the Remote NACKQ is the CLServ NACKQ. For each entry in the Remote NACKQ which has AckState=Remote and that is acknowledged by the acknowledgment number received in the incoming TCP segment (AckNum ≥ PiggybackSeq), a Process NACKQ entry step 1155 is invoked.

The Process NACKQ entry step 1155 removes the acknowledged entry from the Remote NACKQ. This means that remote end has received the data and local end has received the acknowledgement and therefore the data will not be re-transmitted and the history of this segment can be completely removed from the NACKQ. Once all the entries in the Remote NACKQ have been evaluated in the above manner, the Process Ack module 540 is complete.

Referring back to decision step 1105, if the acknowledgment number of the incoming TCP segment is not valid, the connection is dropped by sending RST segments to both the Client 505 and the Server 595 and the Connection Table 600 is cleared by setting State (Connection State) = LISTEN.

The following is a simple example of TCP connection establishment and the subsequent transfer of data. The description to follow and the Tables in Appendix A summarize the corresponding updates made to the Connection Table and outgoing segments by the TCP Normalization Engine of the present invention, using the behavior that has just been described.

### EXAMPLE

A description of the operation of the TCP Normalization Engine 520 of the present invention for a simple TCP connection is provided below with reference to Appendix A. Appendix A summarizes the Connection Table updates carried out by the TCP Normalization engine.

Consider the case for a TCP connection established between a Client and Server using the well known SYN, SYN+ACK, ACK handshaking protocol. Following connection establishment, a TCP segment with 232 bytes of payload data is sent from the Client to the Server and payload filtering results in the payload data of the TCP segment being increased by 4 bytes before it is sent to Server. The Server acknowledges receipt of the modified TCP segment (i.e. the segment containing a modified payload data length) with an ACK segment. Subsequently, a TCP segment with 317 bytes of payload data which is not modified by payload filtering is sent to the Client. The Client acknowledges receipt of this unmodified TCP segment with an ACK segment.

With regard to connection establishment, a SYN segment is first received from the Client, with values of <SeqNum=54365, AckNum=0, Window=5840>. The Connection Table updates corresponding to the received SYN segment are shown in *A1. SYN from Client* in Appendix A. The updates are as follows :
- CLServ.MaxSeq = SeqNum+1 (= 54366)
- CLServ.MaxSeq^{F} = SeqNum+1 (= 54366)
- State is set to SYN_SENT (=1)
After the Connection Table is updated, the SYN segment is forwarded to the Server.

In response to the SYN segment sent by the Client, a SYN+ACK segment is received from the Server, with values of <SeqNum= 39103, AckNum= 54366, Window= 5840>. The Connection Table updates corresponding to the received SYN+ACK segment are shown in *A2. SYN+ACK from Server* in Appendix A. The updates are as follows:
- ServCL.MaxSeq = SeqNum+1 (=39104)
- ServCL.MaxAck= AckNum (=54366)
- ServCL.MaxWin = Window (=5840)
- ServCL.MaxSeq^{F} = SeqNum+1 (=39104)
- ServCL.MaxAck^{F} = AckNum (=54366)
- State is set to SYN_RCVD (=2)
Subsequent to updating of the Connection Table, the SYN+ACK segment is forwarded to the Client.

To complete connection establishment, an ACK segment is received from the Client with values of <SeqNum=54366, AckNum=39104, Window=5840>. The Connection Table updates corresponding to the ACK segment received from the Client are shown in *A3. ACK from Client* in Appendix A. The updates are as follows:
- CLServ.MaxAck= AckNum (=39104)
- CLServ.MaxAck^{F} = AckNum (=39104)
- CLServ.MaxWin = Window (=5840)
- State is set to ESTABLISHED (=3)
After updating of the Connection Table, the ACK segment is forwarded to the Server. Connection establishment is now complete and TCP segments containing payload data may be transmitted back and forth between the Client and the Server.

A TCP segment having 232 bytes of payload data is then received from the Client with incoming values of <SeqNum= 54366, AckNum=39104, Window=5840>. During payload filtering, the payload data of the TCP segment is modified or increased by 4 bytes (i.e. correction = +4). The corresponding updates made to the Connection Table are shown in *A4. SEQ Data from Client* in Appendix A and are detailed below:
- CLServ.MaxSeq= SeqNum+Payload data length (=54366+232=54598)
- a CLServ.NACKQ entry is stored : PackSeq=SeqNum (=54366); PackSeqData= PackSeq+Payload data length (=54366+232=54598); PackSeq^{F} =CLServ.MaxSeq^{F}(=54366); PackSeqData^{F}=PackSeq^{F}+Payload data length+correction (=54366+232+4=54602); PackData^{F} =filtered data; AckState=No and ModifiedFlag=1
A modified TCP segment with 236 bytes of payload data is then sent to the Server with values of <SeqNum= PackSeq^{F}(=54366), AckNum=MaxAck^{F}(=39104), Window=CLServ.MaxWin(=5840)>. The following update is then made to the Connection Table:
- CLServ.MaxSeq^{F} =CLServ.MaxSeq^{F}+ Payload data length + correction (54366+232+4=54602)

In response to the modified TCP segment with 236 bytes of payload data, an ACK only segment is received from the Server to acknowledge receipt of this data, with values of <AckNum=54602, Window=5840>. In this case, the CLServ.NACKQ is searched to find the entry which is acknowledged by this ACK segment. Specifically, the entry in the CLServ.NACKQ which is acknowledged by the ACK segment (CLServ.NACKQ entry) will have PackSeqData^{F} < = AckNum and AckState = No The corresponding updates made to the Connection Table are summarized in *A5. ACK (No Data) from Server* in Appendix A and are as follows:
- ServCL.MaxAck^{F} = AckNum(=54602)
- ServCL.MaxAck = PackSeqData (=54598)
- CLServ.NACKQ entry is updated to AckState=Local
- ServCL.MaxWin= Window (=5840)
An ACK segment is then sent to the Client with <AckNum=PackSeqData(=54598), Window= ServCL.MaxWin(=5840)>. This ACK segment has an AckNum equal to the acknowledgment number 'expected' by the Client i.e. the acknowledgment number for the TCP segment originally sent by the Client and having a 232 byte payload (SeqNum + Payload data length = 54366+232=54598).

A TCP segment with 317 bytes of payload data is then received from the Server with <SeqNum=39104, AckNum=54602, Window=5840>. There is no change to the payload data length of the TCP segment due to payload filtering. Corresponding updates to the Connection Table are summarized in *A6. SEQ Data from Server* in Appendix A. The following updates are made :
- ServCL.MaxSeq= SeqNum+Payload data length (=39104+317=39421)
- ServCL. MaxSeq^{F} =SeqNum+Payload data length+correction (=39104+317+0=39421)
- a ServCL.NACKQ entry is stored with PackSeq=SeqNum (=39104); PackSeqData= PackSeq+ Payload data length (=39104+317=39421); AckState=No and ModifiedFlag=0
- CLServ.NACKQ entry with PackSeqData^{F}=54602 and AckState=Local, set PiggybackSeq= ServCL.MaxSeq^{F}(=39104)
A TCP segment with 317 bytes of payload data is then sent to the Client with <SeqNum= PackSeq^{F}(=54366), AckNum=MaxAck^{F}(=39104), Window=ServCL.MaxWin(=5840)>.

In response to the TCP segment sent by the Server having 317 bytes of payload data, an ACK segment is received from the client acknowledging receipt of this TCP segment with <AckNum=39421, Window = 5523>. In this case, the ServCL.NACKQ is searched to find the entry which is acknowledged by this ACK segment. Specifically, the entry in the ServCL.NACKQ which is acknowledged by the ACK segment (ServCL.NACKQ entry) will have PackSeqData^{F} < = AckNum and AckState = No The corresponding updates made to the Connection Table are summarized in *A7. ACK (No Data) from Client* in Appendix A.
- CLServ.MaxAck^{F} = AckNum(=39421)
- ServCL.MaxAck=PackSeqData (=39421)
- CLServ.NACKQ entry is changed to AckState=Local
- CLServ.MaxWin= Window(=5523)
An ACK segment is then sent to the Server with <AckNum=PackSeqData(=39421), Window= CLServ.MaxWin(=5523)>. The CLServ.NACKQ is then searched to find an entry who AckState=Remote and whose PiggybackSeq is acknowledged by this AckNum. This entry is then removed from the NACKQ.

This completes the example. The use of the NSQ is not covered in this example. Those skilled in the art will appreciate, however, that the NSQ involves straightforward queuing of packets to send if the receive window at the Client or Server is closed.

It will be appreciated that the TCP Normalization Engine of the present invention may be implemented in hardware, as a computer program product (i.e. software) or a combination of the two. The Connection Table is a state table that may be stored and dynamically updated using any suitable computer read/writeable memory (e.g. RAM, Flash memory, etc.). The control logic of the TCP Normalization Engine may be implemented as software that may include a series of computer executable instructions fixed either on a tangible medium, such as a computer readable medium (e.g. CD-ROM, ROM, RAM, Flash memory, fixed disk etc.) or transmittable to a host computer system, via a modem or other interface device, such as a communications adapter connected to a network over a medium. The medium may be either a tangible medium (e.g. optical or electrical communication lines) or a medium implemented with wireless techniques (e.g. microwave, infrared or other transmission techniques). It is expected that such a computer program product may be distributed as a removable medium with accompanying printed or electronic documentation (e.g. shrink wrapped software), preloaded within a computer system (e.g. on system ROM or fixed disk), or distributed from a server over the network (e.g. the Internet or World Wide Web). Of course, conceived embodiments of the invention may also be implemented as a combination of both software (e.g. a computer program product) and hardware. Still other embodiments of the invention may be implemented entirely as hardware, or entirely software.

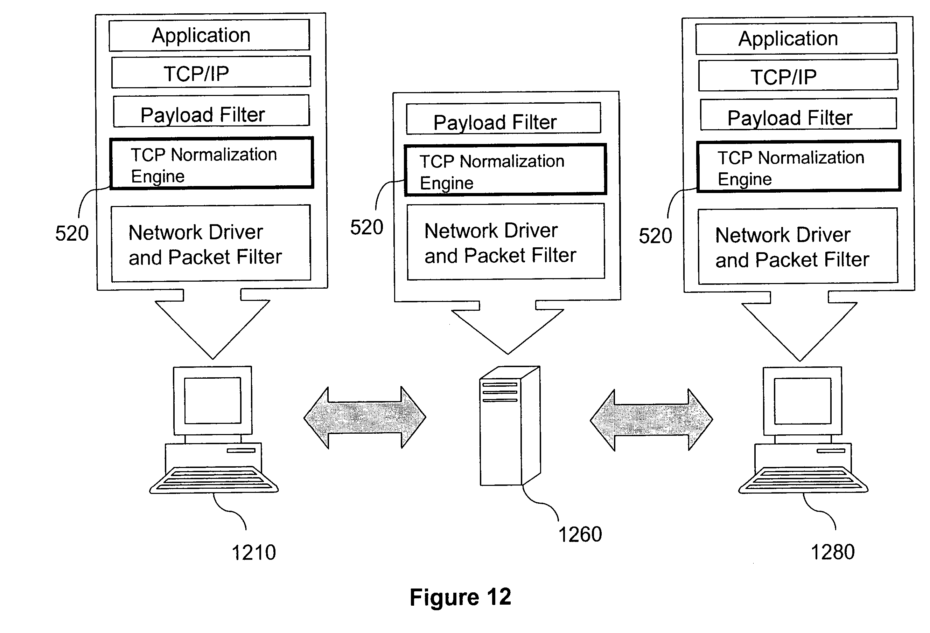

Referring lastly to Figure 12, it will be appreciated by those skilled in the art that the TCP Normalization Engine 520 of the present invention may reside anywhere in the network between two hosts communicating via a TCP connection. Specifically, the TCP Normalization Engine 520 may reside in the protocol stack of a TCP client 1210, in the protocol stack of a TCP server 1280, beneath the TCP/IP stack itself within any one of the client 1210 and the server 1280 or, alternatively, within a network device 1260 located in between the client 1210 and the server 1280 (or any pair of TCP hosts).

Although various exemplary embodiments of the invention have been disclosed, it should be apparent to those skilled in the art that various changes and modifications can be made which will achieve some of the advantages of the invention without departing from the true scope of the invention.

A person understanding this invention may now conceive of alternative structures and embodiments or variations of the above all of which are intended to fall within the scope of the invention as defined in the claims that follow.

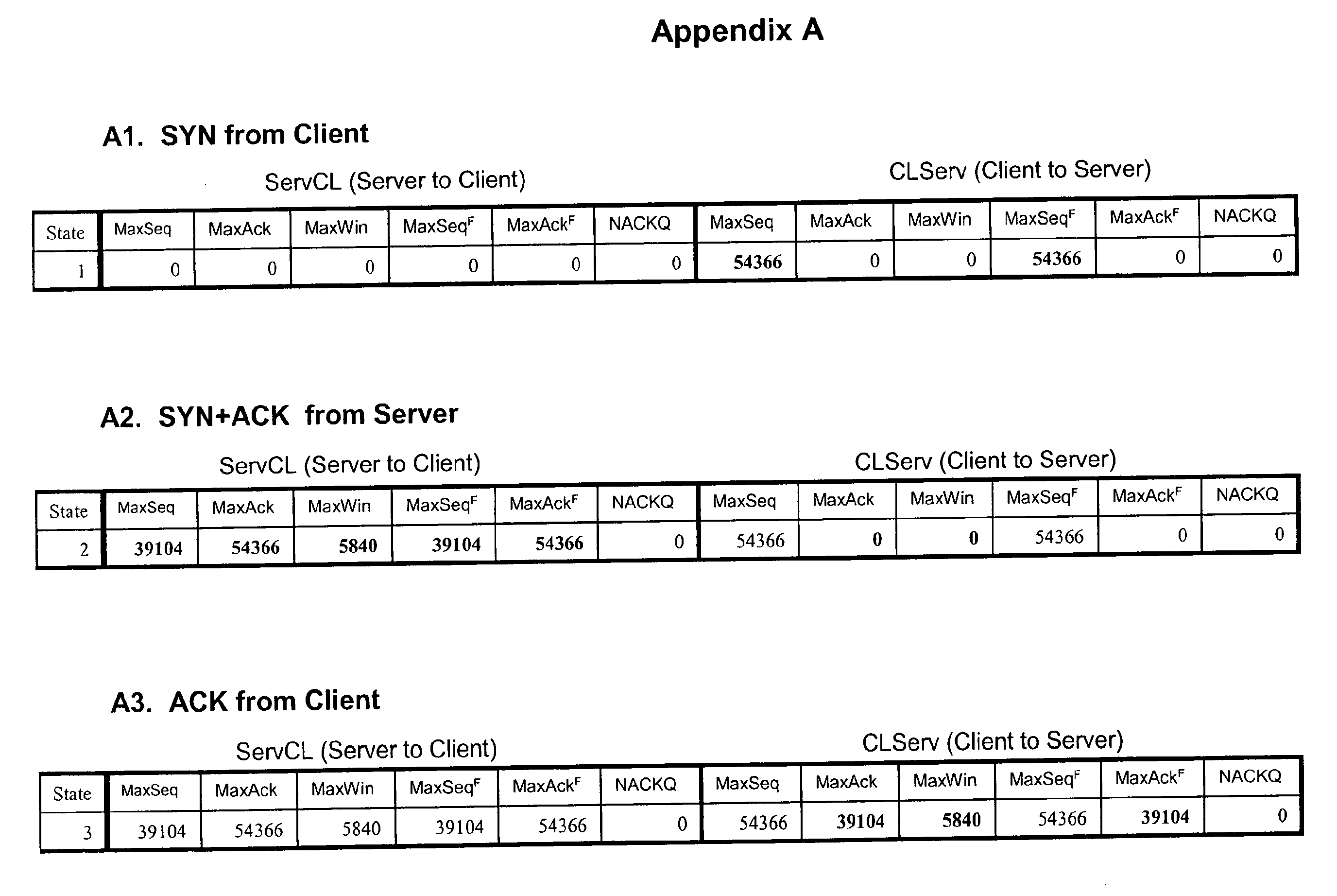

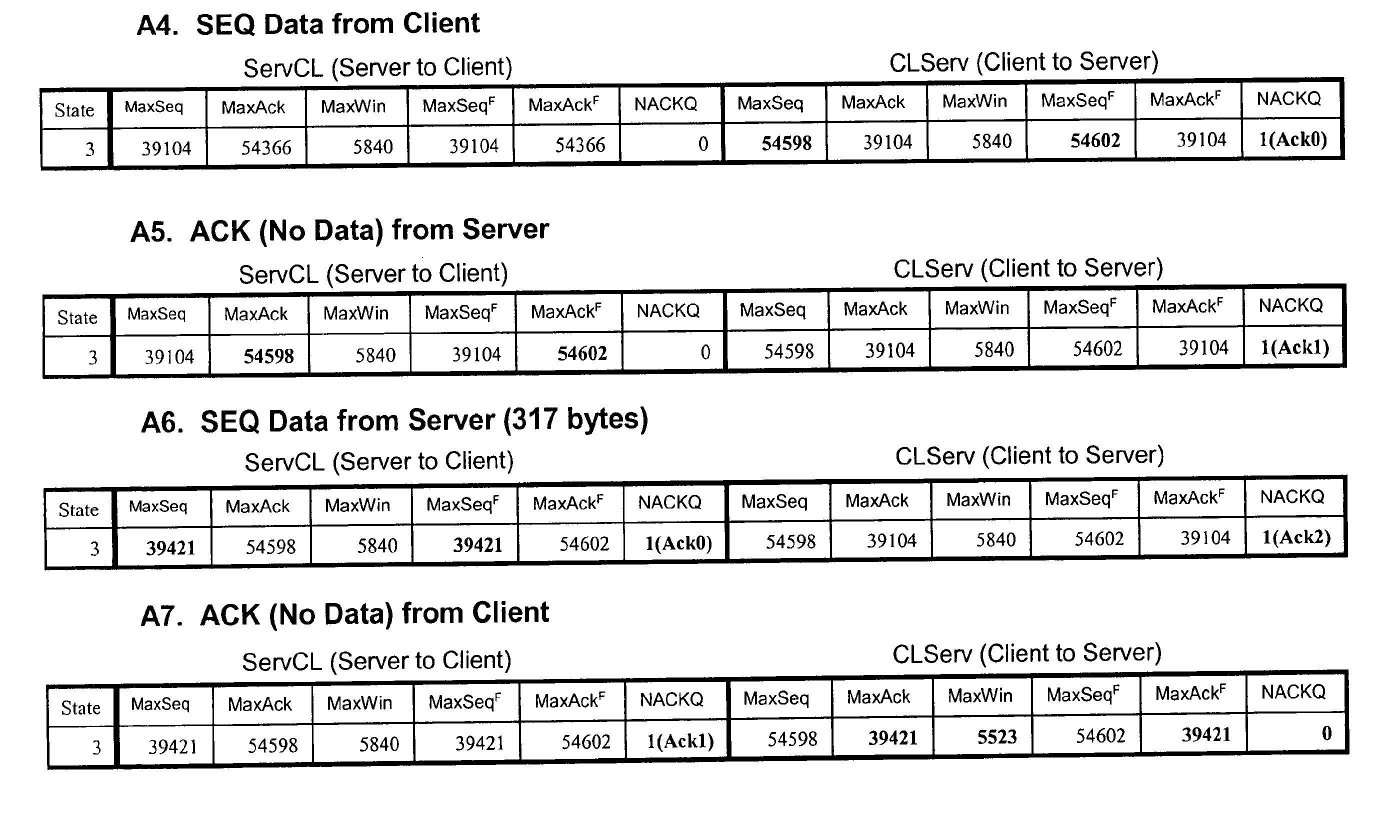

## Claims

1. In a TCP normalization engine communicating with a source and a destination, a method of maintaining a TCP connection between the source and the destination during modification of a payload associated with a TCP segment, the method comprising:
(a) receiving the TCP segment from the source at a process incoming module;
(b) determining if the TCP segment contains payload data;
(c) if the TCP segment contains payload data, invoking a process ack module and a process seq module, wherein the process seq module processes the payload data to determine if a payload correction is required;
(d) if a payload correction is required, updating a state table and modifying the payload data to reflect the payload data correction;
(e) modifying the TCP segment with at least the modified payload data; and
(f) forwarding the modified TCP segment to the destination.

2. The method of claim 1 further comprising:
(g) receiving in the process ack module at least an acknowledgement from the destination;
(h) determining if the acknowledgement confirms receipt of the modified payload data sent by the process seq module;
(i) if the acknowledgement confirms receipt of the modified payload data, updating the state table and modifying the acknowledgement with at least an acknowledgement number expected by the source; and
(j) forwarding the modified acknowledgement to the source.

3. The method of claim 1 wherein the processing of the payload data in step (c) comprises sending the TCP segment to a payload filter communicating with the process seq module.

4. The method of claim 3 wherein the modifying of the payload data in step (d) occurs in the payload filter.

5. The method of claim 2 wherein the updating of the state table in step (d) comprises storing: (i) the acknowledgment number expected by the source; and (ii) a modified acknowledgment number expected by the TCP normalization engine.

6. The method of claim 1 wherein the modifying of the TCP segment in step (e) further comprises correcting a sequence number and an acknowledgement number.

7. The method of claim 2 wherein the determining in step (h) comprises comparing an acknowledgement number contained in the received acknowledgement, with the modified acknowledgement number stored in the state table.

8. The method of claim 7 wherein the updating of the state table in step (i) comprises: (i) storing the received acknowledgement number in the state table; and (ii) extracting and mapping the acknowledgement number expected by the source from a first position to a second position in the state table.

9. The method of claim 8 wherein the acknowledgement number is extracted from a queue of TCP segments which have not been acknowledged.

10. The method of claim 9 wherein the acknowledgment number is mapped to an expected acknowledgement number field in a server-to-client portion of the state table.

11. The method of claim 1 wherein, prior to forwarding the modified payload data to the destination: (i) determining if the destination is unable to receive the modified payload data; and (ii) if the destination is unable to receive the modified payload data, placing the modified payload data in a queue of TCP segments which have not been sent.

12. The method of claim 3 wherein the determining in step (b) further comprises, prior to sending the TCP segment to the payload filter: (i) determining if the received TCP segment is a retransmission from the source; and (ii) if the received TCP segment is a retransmission, then retransmitting the TCP segment from the process seq module to the destination.

13. The method of claim 1 further comprising, if the modified payload data exceeds a predefined threshold, sending the modified payload data in multiple ones of the TCP segment.

14. A computer readable medium having stored thereon, computer executable instructions which, when executed by a processor in a server cause the processor to:
(a) receive the TCP segment from the source at a process incoming module;
(b) determine if the TCP segment contains payload data;
(c) if the TCP segment contains payload data, invoke a process ack module and a process seq module, wherein the process seq module processes the payload data to determine if a payload correction is required;
(d) if a payload correction is required, update a state table and modify the payload data to reflect the payload data correction;
(e) modify the TCP segment with at least the modified payload data; and
(f) forward the modified TCP segment to the destination;
(g) receive in the process ack module at least an acknowledgement from the destination;
(h) determine if the acknowledgement confirms receipt of the modified payload data sent by the process seq module;
(i) if the acknowledgement confirms receipt of the modified payload data, update the state table and modifying the acknowledgement with at least an acknowledgement number expected by the source; and
(j) forward the modified acknowledgement to the source.

15. A modulated carrier wave generated by a TCP normalization engine communicating with a destination, wherein the modulated carrier wave embodies a data signal representing a modified payload data, and wherein the modified payload data is generated by a process seq module integral to the TCP normalization engine, and wherein a TCP segment is received by a process incoming module and analyzed to determine if the TCP segment contains payload data and, if the TCP segment does contain payload data, a process ack module and a process seq module are invoked, and wherein the process seq module processes the payload data to determine if a payload correction is required and, if a payload correction is required, updates a state table and modifies the original payload data to produce a modified payload data, and wherein the TCP segment is modified with at least the modified payload data forwarded to the destination in the modulated carrier wave.

16. A TCP normalization engine for maintaining a TCP connection between a source and a destination when payload data associated with a TCP segment transmitted from the source to the destination is modified, the TCP normalization engine comprising:
(a) a state table for storing at least: (i) an acknowledgement number expected by the source; and (ii) a modified acknowledgment number expected by the TCP normalization engine;
(b) a process incoming module for receiving the TCP segment from the source and initializing the state table during establishment of the TCP connection between the source and the destination;
(c) a process ack module for processing an acknowledgment number received from the destination and updating the state table accordingly; and
(d) a process seq module for processing payload data contained in the received TCP segment to determine if a correction is required, modifying the payload data and associated TCP segment to reflect the correction, updating the state table and forwarding the modified TCP segment to the destination,
wherein said process incoming, process ack and process seq modules interact with said state table and the destination and source to maintain the TCP connection.

17. The TCP normalization engine of claim 16 further including a payload filter communicating with the process seq module and wherein the processing and modifying of the payload data is performed by the payload filter.

18. The TCP normalization engine of claim 16 wherein the state table comprises a server-to-client portion and a client-to-server portion.

19. The TCP normalization engine of claim 16 wherein the state table further comprises a queue of TCP segments which have not been filtered.

20. The TCP normalization engine of claim 16 wherein the state table further comprises a queue of TCP segments which have not been acknowledged.

21. The TCP normalization engine of claim 16 wherein the state table further comprises a queue of TCP segments which have not been sent.

22. The TCP normalization engine of claim 18 wherein each of said server-to-client and a client-to-server portions contain entries taken from the group comprising State, MaxAck, Max Win, MaxSeq, MaxAcK^{F}, MaxSeq^{F}, NFQ, NACKQ and NSQ.

23. The TCP normalization engine of claim 19 wherein the queue contains entries taken from the group comprising PackSeq, PackSeqData and PackData.

24. The TCP normalization engine of claim 20 wherein the queue contains entries taken from the group comprising PackSeq, PackSeqData, AckState, PiggybackSeq, ModifiedFlag, PackSeq^{F}, PackSeqData^{F} and PackData^{F}.

25. The TCP normalization engine of claim 21 wherein the queue contains entries taken from the group comprising PackSeq, PackSeqData, ModifiedFlag, PackSeq^{F}, PackSeqData^{F}, PackData^{F}.
